# FASCICULE DE BREVET EUROPEEN

(11) **EP 3 856 619 B1**
(45) Date de publication et mention de la délivrance du brevet: **07.05.2025**
(21) Numéro de dépôt: 19778573.6
(22) Date de dépôt: 28.08.2019
(51) Int. Cl.: B62D 35/02, B60R 13/08

(54) **CARÉNAGE DE FOND D'UN CHÂSSIS DE VÉHICULE AUTOMOBILE, MUNI DE RENFORTS DE RIGIDIFICATION DE PAROIS LATÉRALES DU CARÉNAGE**
UNTERE VERKLEIDUNG EINES KRAFTFAHRZEUGCHASSIS MIT VERSTEIFENDEN VERSTÄRKUNGEN DER SEITENWÄNDE DER VERKLEIDUNG
BOTTOM FAIRING OF A MOTOR VEHICLE CHASSIS, PROVIDED WITH RIGIDIFYING REINFORCEMENTS OF SIDE WALLS OF THE FAIRING

(30) Priorité: 25.09.2018 FR 1858752
(43) Date de publication de la demande: 04.08.2021
(73) Titulaire: Stellantis Auto SAS, 78300 Poissy (FR)
(72) Inventeur: BERTH, Stéphane, 92320 CHATILLON (FR)
(74) Mandataire: BCIP
(86) Numéro de dépôt international: PCT/FR2019/051983
(87) Numéro de publication internationale: WO 2020/065150

(56) Documents cités:
- DE-A1- 102009 015 548
- DE-A1- 102014 114 263
- DE-B- 1 286 917
- GB-A- 463 620

## Description

La présente invention relève du domaine des carénages de fond installés sous une plateforme d'un châssis de véhicule automobile. L'invention concerne plus particulièrement des modalités de renfort de tels carénages de fond à l'encontre de leur déformation, pour notamment protéger des équipements logés à l'intérieur d'un compartiment ménagé dans le soubassement du véhicule entre la plateforme et au moins un dit carénage de fond.

Un véhicule automobile comprend un châssis sur lequel sont montés divers équipements du véhicule. Dans le cadre de l'invention, le châssis ménage notamment un soubassement du véhicule comprenant une plateforme munie d'au moins un carénage de fond s'étendant sous la plateforme. Un ou plusieurs équipements peuvent être installés sous la plateforme, en étant logés à l'intérieur d'un compartiment ménagé entre la plateforme et le ou les carénages de fond.

Les carénages de fond permettent de protéger les équipements installés à l'intérieur dudit compartiment, et forment aussi des organes aérodynamiques permettant d'améliorer la stabilité du véhicule en progression et/ou de réduire sa traînée. L'amélioration des conditions de pénétration du véhicule dans l'air permet notamment de réduire sa consommation en énergie de propulsion et par suite permet d'accroître son autonomie.

Parmi les équipements pouvant être par exemple installés sous la plateforme, des canaux hydrauliques et/ou des faisceaux électriques sont susceptibles de s'étendre à l'intérieur dudit compartiment. Par exemple encore, le compartiment peut loger des batteries qui fournissent au moins en partie l'énergie propulsive du véhicule, tel que pour les véhicules électriques propulsés exclusivement par une motorisation électrique ou pour les véhicules hybrides propulsés par une motorisation électrique et/ou une motorisation par combustion.

Il est connu de renforcer un carénage de fond et/ou de le munir de déflecteurs d'obstacle à la progression du véhicule, tel qu'il ressort par exemple du document DE102014114263-A1 (PORSCHE AG). Selon ce document, de tels déflecteurs d'obstacle sont installés sous un carénage de fond du véhicule, en étant inclinés par rapport à la direction d'avancement du véhicule. Les déflecteurs d'obstacle permettent de protéger une batterie du véhicule installée sous la plateforme, vis-à-vis d'éventuels dommages causés par des obstacles susceptibles de heurter le carénage de fond.

Les documents GB463620 et DE1286917 décrivent un carénage de fond comportant des parois latérales d'extension verticale.

Cependant, les carénages de fond peuvent subir des efforts et/ou des contraintes qui peuvent être divers, comme par exemple lorsqu'un véhicule est soulevé par un élévateur via des sangles glissées transversalement sous le soubassement du véhicule et donc sous les carénages de fond. En effet dans ce cas, le poids du véhicule est supporté par les sangles qui compriment alors les carénages de fond, au risque de les endommager latéralement et/ou de provoquer leur flexion dans leur plan général d'extension.

Ceci induit finalement un risque d'endommagement des équipements qui sont notamment situés en bordure latérale du véhicule, à l'intérieur du compartiment ménagé par le volume s'étendant entre la plateforme et les carénages, comme par exemple des conduits. Il est compris ici que la notion de conduit regroupe par exemple des canaux conducteurs d'un fluide et/ou des faisceaux de câbles conducteurs d'énergie électrique. A titre indicatif non restrictif, il est utile de protéger de tels conduits lorsque ceux-ci équipent une batterie fournissant une énergie électrique de propulsion du véhicule. En effet, une rupture de tels conduits entraîne un arrêt immédiat du véhicule.

Dans ce contexte, l'invention a pour objet un carénage de fond d'un véhicule automobile, un châssis de véhicule automobile dont le soubassement est muni d'au moins un carénage de fond conforme à l'invention, et un véhicule automobile comprenant un châssis conforme à l'invention.

Un but de l'invention est de proposer une solution pour obvier à un éventuel endommagement d'équipements du véhicule installés sous la plateforme en bordure latérale du véhicule. Il est notamment visé par l'invention d'éviter un endommagement significatif du carénage de fond, et notamment sa déformation, sous l'effet d'efforts et/ou de contraintes qui peuvent lui être éventuellement appliqués. Il est plus spécifiquement visé par l'invention d'éviter un endommagement significatif du carénage de fond et/ou sa flexion dans son plan global, lorsque le véhicule est soulevé via des sangles glissées transversalement sous le soubassement du véhicule. Il est encore plus spécifiquement visé par l'invention de protéger des conduits s'étendant sous la plateforme en bordure latérale du véhicule, lorsque le carénage de fond subit des pressions latérales.

Un autre but de l'invention est de proposer une telle solution qui évite d'encombrer le volume intérieur du soubassement et/ou d'être une cause de gêne pour l'installation d'équipements sous la plateforme. La solution est aussi recherchée en évitant que son application n'induise un risque de dégradation des équipements installés sous la plateforme, notamment en cas de choc latéral supporté par le véhicule et/ou en cas de choc provoqué par un obstacle à l'encontre de la progression du véhicule et supporté par le carénage de fond.

Un autre but de l'invention est de proposer une telle solution qui préserve la ligne esthétique du véhicule à laquelle la clientèle est sensible dans son acte d'achat d'un véhicule.

Un autre but de l'invention est de proposer une solution à moindres coûts, en simplifiant au mieux la structure, les modalités d'obtention et/ou les modalités d'installation du carénage de fond sous la plateforme. Une telle recherche s'inscrit notamment dans le contexte d'une concurrence économique notoirement sévère dans le domaine automobile, pouvant rendre rédhibitoire une solution potentielle en raison des coûts induits.

Les buts visés par la présente invention sont atteints isolément ou en combinaison par application des dispositions qui suivent.

Un carénage de fond conforme à l'invention est configuré pour équiper un soubassement de véhicule automobile. Le carénage de fond est d'extension globalement plane suivant une direction longitudinale et une direction transversale. Le carénage de fond comporte des parois latérales d'extension verticale ménagées respectivement au moins en partie le long des bords latéraux du carénage, lesdites parois latérales s'étendant longitudinalement aux extrémités transversales du carénage.

Dans ce contexte, le carénage de fond de l'invention est reconnaissable en ce que chacune desdites parois latérales est munie d'au moins un renfort qui s'étend au moins en partie verticalement et au moins en partie le long de la paroi latérale, et le renfort comporte une structure cellulaire s'étendant depuis la paroi latérale vers le volume intérieur délimité par le carénage.

Les renforts sont aptes à préserver le carénage vis-à-vis de contraintes et/ou d'efforts exercés latéralement en pression contre le carénage, via les parois latérales qu'il comprend. Les renforts évitent ainsi une déformation significative des parois latérales du carénage et/ou une mise en flexion du carénage dans son plan d'extension sous l'effet de telles pressions exercées contre lesdites parois latérales. En outre en cas d'impacts modérés supportés par le carénage, notamment lors de la progression du véhicule, les parois latérales sont préservées par les renforts d'une déformation pouvant d'être provoquée par lesdits impacts.

Ainsi des équipements logés entre une plateforme du soubassement du véhicule et au moins un carénage conforme à l'invention, sont préservés lorsque les parois latérales du ou des carénages sont soumises auxdites contraintes et/ou auxdits efforts latéraux. De tels équipements sont notamment formés de conduits pouvant s'étendre au moins an partie en bordure longitudinales du ou des carénages, et/ou au moins une batterie installée sous ladite plateforme.

Les conduits sont notamment dédiés au fonctionnement de la dite au moins une batterie et comprennent par exemple un ou plusieurs faisceaux de câbles conducteurs d'énergie électrique et/ou un ou plusieurs canaux hydrauliques affectés au traitement thermique de la batterie, notamment pour son refroidissement. Plusieurs batteries sont susceptibles d'être réparties suivant le plan d'extension du ou des carénages, au moins suivant leur direction transversale d'extension, en constituant une source d'énergie électrique au moins dédiée à fournir une énergie électrique de propulsion du véhicule.

Le renforcement des parois latérales du carénage conformément à l'invention est notamment utile en cas de levage du véhicule via des sangles qui sont réparties le long du carénage en s'étendant transversalement sous le carénage. Les renforts permettent ainsi dans ce cas d'éviter une déformation et/ou une dégradation significatives des parois latérales du carénage et/ou de limiter une déformation en flexion du carénage dans son plan d'extension. En outre en cas d'impact modéré supporté par les parois latérales, les renforts les protègent d'une déformation transversale vers l'intérieur du volume délimité entre la plateforme et ledit au moins un carénage, pour préserver lesdits équipements susceptibles de s'étendre au moins en bordure longitudinale du ou des carénages.

Selon une forme de réalisation, le renfort est ménagé en saillie transversale sur la paroi latérale en étant orienté vers l'extérieur du carénage.

Ceci permet d'éviter un encombrement par les renforts du volume délimité entre la plateforme et le ou les carénages conformes à l'invention, et ainsi permet d'accroître la capacité utile dudit volume pour loger des équipements du véhicule, notamment des batteries et de dits conduits s'étendant au moins en partie longitudinalement le long des parois latérales du ou des carénages.

Selon une forme de réalisation, le renfort est ménagé via un renflement de la paroi latérale.

Autrement dit, les renforts s'étendent en partie le long des parois latérales en débordement transversal du plan global d'extension verticale des parois latérales, de préférence en saillie transversale vers l'extérieur du carénage.

De préférence, les renforts sont susceptibles de s'étendre longitudinalement de part et d'autre de l'axe de gravité du véhicule, suivant une dimension longitudinale du châssis au moins jusqu'à des emplacements prévus pour recevoir de dites sangles de levage. Plusieurs carénages longitudinalement aboutés sur le châssis peuvent comprendre de dits renforts. Dans ce cas, les renforts affectés à chacune des parois latérales d'un premier carénage peuvent être longitudinalement aboutés aux renforts dont sont munies chacune des parois latérales d'un deuxième carénage longitudinalement abouté au premier carénage.

Plus particulièrement, la structure cellulaire est logée à l'intérieur dudit renflement formé dans la paroi latérale du carénage, en s'étendant depuis ladite paroi latérale vers l'intérieur du volume délimité par le carénage. Dans ce cas, la structure cellulaire est susceptible d'être ouverte vers l'intérieur du volume délimité par le carénage.

Selon une forme de réalisation, la structure cellulaire comprend une pluralité d'alvéoles délimitées au moins entre des nervures principales étendues suivant un plan vertical/transversal en étant réparties le long du renfort.

De préférence, des nervures secondaires s'étendent entre deux nervures principales adjacentes. Autrement dit, la structure cellulaire présente une configuration maillée dont les mailles délimitent chacune une dite alvéole. Les nervures secondaires confortent ainsi la résistance des nervures principales à l'encontre de leur déformation.

Les nervures secondaires s'étendent notamment suivant un plan vertical, en étant potentiellement orientées longitudinalement ou en étant potentiellement inclinées par rapport à l'extension longitudinale du carénage.

Selon une forme de réalisation, les nervures principales comportent des échancrures via lesquelles les nervures principales prennent au moins verticalement appui contre un rebord ménagé longitudinalement à l'intérieur du renfort.

Ceci permet de conforter une prise d'appui vertical et/ou transversal fermes des parois latérales du carénage contre la plateforme via les renforts. La résistance à la déformation des parois latérales en est renforcée lorsqu'elles sont soumises à des pressions exercées transversalement et/ou verticalement, notamment lors d'une opération de levage du véhicule.

Selon une forme de réalisation, le renfort est intégré au carénage en étant issu de la matière constitutive de la paroi latérale.

L'invention a aussi pour objet un châssis de véhicule automobile ménageant un soubassement du véhicule. Ledit soubassement comprend une plateforme et au moins un carénage de fond s'étendant sous la plateforme en délimitant entre eux un volume apte à loger des équipements du véhicule. Dans ce contexte, le châssis de l'invention est reconnaissable en ce que ledit au moins un carénage de fond est conforme à l'invention.

Selon une forme de réalisation, le châssis comprend des longerons latéraux disposés en bordure transversale du soubassement. Lesdits longerons sont chacun pourvus d'une feuillure ménageant un masque faisant au moins en partie obstacle à la vue des renforts depuis l'extérieur du châssis. De préférence, les renforts s'étendent verticalement depuis la plateforme sur une portion des parois latérales, pour limiter l'extension verticale dudit masque.

L'invention a aussi pour objet un véhicule automobile comprenant un châssis conforme à l'invention.

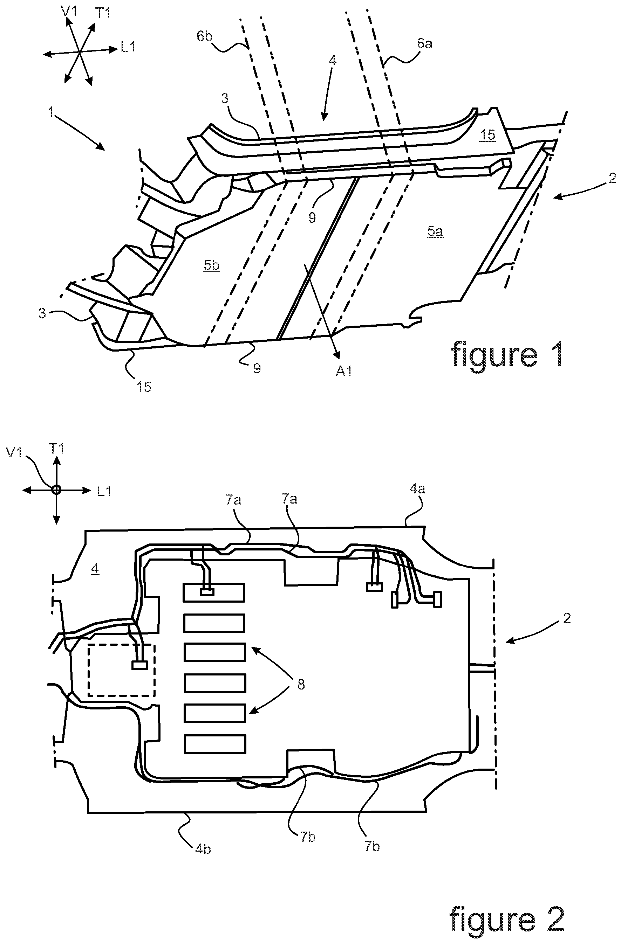

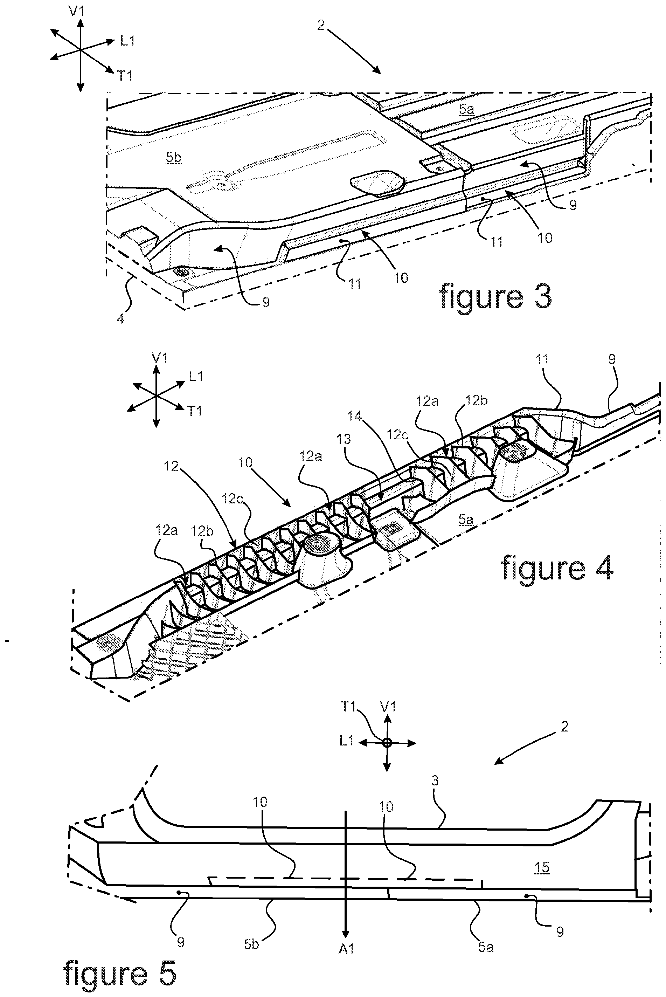

Des exemples de réalisation de la présente invention vont être décrits en relation avec les figures des planches annexées, dans lesquelles :
- ) la figure 1 est une illustration partielle en perspective de dessous d'un soubassement que comprend un châssis de véhicule automobile conforme à l'invention, illustrant le contexte de l'invention.
- ) la figure 2 est une illustration partielle de dessous d'une plateforme que comprend le soubassement représenté sur la figure 1, sous laquelle sont installés divers équipements du véhicule.
- ) la figure 3 est une illustration partielle en perspective de dessous d'un jeu de carénages de fond conformes à l'invention qui sont longitudinalement aboutés et qui équipe le soubassement représenté sur les figures 1 et 2.
- ) la figure 4 est une illustration en perspective de dessus d'un renfort équipant un carénage conforme à l'invention.
- ) la figure 5 est une illustration partielle de côté du soubassement représenté sur la figure 1.

Les figures et leurs descriptions détaillées exposent l'invention selon des modalités particulières qui ne sont pas restrictives quant à la portée de l'invention telle que définie par les revendications. Les figures et leurs descriptions détaillées d'exemples de réalisation de l'invention peuvent servir à mieux la définir, si besoin en relation avec la description générale qui vient d'en être faite.

Des notions sont communément comprises dans le domaine automobile, notamment en ce qui concerne les directions d'extension d'un véhicule automobile et donc du châssis qu'il comprend. De telles notions sont utilisées pour décrire l'invention, notamment en ce qui concerne le châssis et/ou ses composants, ainsi que la disposition relative sur le châssis de ses composants, sauf précision contraire.

Sur la figure 1, un châssis 1 de véhicule automobile s'étend communément suivant une direction longitudinale L1, une direction transversale T1 et une direction verticale V1. Le châssis 1 ménage un soubassement 2 du véhicule qui comprend classiquement au moins des longerons 3 latéraux, une plateforme 4 et un ou plusieurs carénages 5a, 5b de fond. La plateforme 4, non visible sur la figure 1, repose au moins sur lesdits longerons 3 latéraux et sur des traverses, non illustrées, qui relient directement ou indirectement entre eux les longerons 3 latéraux qui s'étendent longitudinalement L1 aux extrémités transversales T1 du châssis 1.

Les carénages 5a, 5b s'étendent suivant un plan global longitudinal/transversal L1/T1 et sont disposés sous la plateforme 4 parallèlement à son plan d'extension longitudinal/transversal L1/T1. La plateforme 4 et le jeu de carénages 5a, 5b sont verticalement V1 distants l'un de l'autre, en ménageant entre eux un volume apte à loger des équipements 7a, 7b, 8 du véhicule.

Sur la figure 1 et la figure 2, il est illustré à titre indicatif non restrictif un contexte dans lequel l'invention trouve particulièrement son utilité.

Sur la figure 1, un véhicule automobile est susceptible d'être soulevé par un appareil de levage via des sangles 6a, 6b s'étendant transversalement sous le châssis 1. Dans ce cas, les sangles 6a, 6b sont réparties longitudinalement de part et d'autre de l'axe de gravité A1 du véhicule, en prenant appui sous et latéralement contre les carénages 5a, 5b comme illustré.

Sur la figure 2, des équipements 7a, 7b, 8 du véhicule sont installés sous la plateforme 4, dans le volume délimité verticalement V1 entre la plateforme 4 les carénages 5a, 5b. Parmi ces équipements 7a, 7b, 8, certains sont susceptibles de s'étendre en bordure longitudinale de la plateforme 4 et/ou d'être répartis suivant le plan longitudinal/transversal L1/T1 d'extension de la plateforme 4 et donc des carénages 5a, 5b.

Selon l'exemple illustré parmi lesdits équipements 7a, 7b, 8, des batteries 8 sont réparties suivant l'extension transversale T1 de la plateforme 4 pour fournir au moins une énergie électrique propulsive du véhicule. Des conduits 7a, 7b affectés au fonctionnement des batteries 8, comprennent par exemple des faisceaux de câbles 7b conducteurs d'électricité et/ou des canaux 7b conducteurs d'un fluide de refroidissement au moins des batteries 8. De tels conduits 7a, 7b s'étendent au moins en partie le long L1 des bords latéraux 4a, 4b de la plateforme 4 et donc à proximité transversales T1 des bords latéraux des carénages 5a, 5b.

Il est dès lors utile de protéger lesdits équipements 7a, 7b, 8 lorsque les carénages 5a, 5b de fond sont soumis à des contraintes et/ou à des efforts, tels que notamment lors du levage du véhicule et/ou en cas d'impacts latéraux. En cas de levage du véhicule notamment, les carénages 5a, 5b de fond supportent des pressions latérales et verticales exercées par les sangles 6a, 6b. Ceci présente un risque d'intrusion des parois du carénage 5a, 5b dans le volume nominal délimité entre la plateforme 4 et les carénages 5a, 5b, avec pour conséquence un risque de détérioration des équipements 7a, 7b, 8 logés entre eux.

Sur les figures 3 à 5, les carénages 5a, 5b présentent des parois latérales 9 qui s'étendent globalement suivant un plan vertical/longitudinal V1/L1, en étant ménagées aux extrémités transversales T1 des carénages 5a, 5b. Pour limiter lesdites déformations que les carénages sont susceptibles de subir, Il est proposé par l'invention de renforcer les parois latérales 9 des carénages 5a, 5b via des renforts 10.

Plus particulièrement visible sur les figures 3 et 5, les renforts 10 s'étendent au moins en partie le long L1 des parois latérales carénages 5a, 5b suivant un plan global vertical/longitudinal V1/L1. Suivant l'extension verticale V1 des parois latérales 9, les renforts 10 s'étendent partiellement sur les parois latérales 9 depuis la plateforme 4.

Plus particulièrement visible sur les figures 3 et 4, les renforts 10 sont ménagés en saillie transversale T1 des parois latérales 9 des carénages 5a, 5b, en étant orientés vers l'extérieur des carénages 5a, 5b et donc vers l'extérieur du châssis 1. Les parois latérales 9 comportent chacune au moins un renflement 11 transversalement T1 orienté vers l'extérieur des carénages 5a, 5b, ledit renflement 11 ménageant une capacité délimitant le renfort 10.

Sur la figure 4, un renfort 10 est illustré plus en détail. Le renfort 10 comporte une structure cellulaire 12 qui s'étend transversalement T1 depuis la paroi latérale 9, dans sa partie comportant ledit renflement 11, vers le volume intérieur délimité par le carénage 5a, 5b. La structure cellulaire 12 comprend une pluralité d'alvéoles 12a qui sont délimitées au moins entre des nervures principales 12b, voire aussi entre des nervures secondaires 12c.

La structure cellulaire 12 conforte la robustesse du renfort 10 et par suite la résistance de la paroi latérale 9 à l'encontre de sa flexion vers l'intérieur du carénage 5a, 5b. Les nervures principales 12b s'étendent suivant un plan vertical/transversal V1/T1 et sont réparties le long L1 du renfort 10. De préférence, des nervures secondaires 12c s'étendent successivement entre deux nervures principales 12b, en étant potentiellement inclinées suivant l'extension longitudinale L1 du carénage 5a, 5b comme illustré.

En outre dans sa partie comportant le renflement 11, la paroi latérale 9 forme un rebord 13 ménageant un plan d'assise contre lequel les nervures principales 12b prennent au moins verticalement V1 appui. Les nervures principales 12b comportent des échancrures 14 via lesquelles les nervures principales 12b prennent verticalement V1 et transversalement T1 appui contre ledit rebord 13. Ceci permet de conforter la prise d'appui vertical V1 du renfort 10 contre la plateforme 4, et par suite de conforter la résistance en flexion de la paroi latérale 9 et/ou une déformation des carénages 5a, 5b dans leur plan global, notamment lors d'une opération de levage du véhicule via les sangles 6a, 6b.

Sur la figure 5, les longerons 3 latéraux que comprend le châssis 1 présentent une feuillure 15 ou sont habillés d'un élément de carrosserie comportant une telle feuillure 15. La feuillure 15 s'étend le long du longeron 3 suivant un plan longitudinal/vertical L1/V1 en couvrant au moins partiellement la paroi latérale 9 des carénages 5a, 5b. Une telle feuillure 15 forme ainsi un masque à l'encontre de la vue par un individu dudit renfort 10 depuis l'extérieur du châssis 1. Un tel masquage du renfort 10 permet de ne pas altérer la ligne esthétique du véhicule, à laquelle la clientèle est sensible dans son acte d'achat d'un véhicule.

## Revendications

1. Carénage (5a, 5b) de fond configuré pour équiper un soubassement (2) de véhicule automobile, le carénage (5a, 5b) de fond étant d'extension globalement plane suivant une direction longitudinale (L1) et une direction transversale (T1), le carénage (5a, 5b) de fond comportant des parois latérales (9) d'extension verticale ménagées respectivement au moins en partie le long (L1) des bords latéraux du carénage (5a, 5b), lesdites parois latérales (9) s'étendant longitudinalement (L1) aux extrémités transversales (T1) du carénage (5a, 5b), chacune desdites parois latérales (9) étant munie d'au moins un renfort (10) qui s'étend au moins en partie verticalement (V1) et au moins en partie le long (L1) de la paroi latérale (9), **caractérisé en ce que** le renfort (10) comporte une structure cellulaire s'étendant depuis la paroi latérale (9) vers le volume intérieur délimité par le carénage (5a, 5b).

2. Carénage (5a, 5b) de fond selon la revendication 1, **caractérisé en ce que** le renfort (10) est ménagé en saillie transversale (T1) sur la paroi latérale (9) en étant orienté vers l'extérieur du carénage (5a, 5b).

3. Carénage (5a, 5b) de fond selon l'une quelconque des revendications 1 et 2, **caractérisé en ce que** le renfort (10) est ménagé via un renflement (11) de la paroi latérale (9).

4. Carénage (5a, 5b) de fond selon l'une des revendications précédentes, **caractérisé en ce que** la structure cellulaire comprend une pluralité d'alvéoles (12a) délimitées au moins entre des nervures principales (12b) étendues suivant un plan vertical/transversal (V1/T1) en étant réparties le long (L1) du renfort (10).

5. Carénage (5a, 5b) de fond selon la revendication 4, **caractérisé en ce que** les nervures principales (12b) comportent des échancrures via lesquelles les nervures principales (12b) prennent au moins verticalement (V1) appui contre un rebord (13) ménagé longitudinalement (L1) à l'intérieur du renfort (10).

6. Carénage (5a, 5b) de fond selon l'une quelconque des revendications 1 à 5, **caractérisé en ce que** le renfort (10) est intégré au carénage (5a, 5b) en étant issu de la matière constitutive de la paroi latérale (9).

7. Châssis (1) de véhicule automobile ménageant un soubassement (2) du véhicule qui comprend une plateforme (4) et au moins un carénage (5a, 5b) de fond s'étendant sous la plateforme (4) en délimitant entre eux un volume apte à loger des équipements (7a, 7b, 8) du véhicule, **caractérisé en ce que** ledit au moins un carénage (5a, 5b) de fond est conforme à l'une quelconque des revendications 1 à 6.

8. Châssis (1) selon la revendication 7, **caractérisé en ce que** le châssis (1) comprenant des longerons (3) latéraux disposés en bordure transversale (T1) du soubassement (2), lesdits longerons (3) sont chacun pourvus d'une feuillure (15) ménageant un masque faisant au moins en partie obstacle à la vue des renforts (10) depuis l'extérieur du châssis (1).

9. Véhicule automobile **caractérisé en ce que** le véhicule comprend un châssis (1) selon l'une quelconque des revendications 7 et 8.

## Patentansprüche

1. Untere Verkleidung (5a , 5b) zur Ausstattung eines Unterbodens (2) eines Kraftfahrzeugs, wobei die untere Verkleidung ( 5a , 5b ) eine im Allgemeinen ebene Ausdehnung in einer Längsrichtung (L1) und einer Querrichtung (T1) aufweist und Seitenwände (9) mit vertikaler Ausdehnung umfasst, die jeweils zumindest teilweise entlang (L1) der Seitenkanten der Verkleidung (5a , 5b) angeordnet sind, wobei die Seitenwände (9) sich in Längsrichtung (L1) an den Querenden (T1) der Verkleidung (5a , 5b) erstrecken und wobei jede der Seitenwände (9) mit zumindest einer Verstärkung (10) versehen ist, die sich zumindest teilweise vertikal (V1) und zumindest teilweise entlang (L1) der Seitenwand (9) erstreckt, **dadurch gekennzeichnet, dass** die Verstärkung (10) eine Zellstruktur umfasst, die sich von der Seitenwand (9) in Richtung des durch die Verkleidung (5a , 5b) begrenzten Innenvolumens erstreckt.

2. Untere Verkleidung (5a, 5b) nach Anspruch 1, **dadurch**
**gekennzeichnet, dass** die Verstärkung (10) in Querprojektion (T1) an der Seitenwand (9) vorgesehen ist und dabei zur Außenseite der Verkleidung (5a, 5b) zeigt.

3. Untere Verkleidung (5a, 5b) nach einem der Ansprüche 1 und 2,
**dadurch gekennzeichnet, dass** die Verstärkung (10) durch eine Ausbuchtung (11) der Seitenwand (9) erfolgt.

4. Untere Verkleidung (5a, 5b) nach einem der vorhergehenden Ansprüche, **dadurch gekennzeichnet, dass** die Zellstruktur eine Vielzahl von Zellen (12a) umfasst, die zumindest zwischen Hauptrippen (12b) abgegrenzt sind, die sich entlang einer vertikalen/querverlaufenden Ebene (V1/T1) erstrecken und dabei entlang (L1) der Verstärkung (10) verteilt sind.

5. Bodenverkleidung (5a, 5b) nach Anspruch 4, **dadurch**
**gekennzeichnet, dass** die Hauptrippen (12b) Einkerbungen aufweisen, über die die Hauptrippen (12b) zumindest vertikal (V1) an einem in Längsrichtung (L1) innerhalb der Verstärkung (10) angeordneten Rand (13) anliegen.

6. Untere Verkleidung (5a, 5b) nach einem der Ansprüche 1 bis 5,
**dadurch gekennzeichnet, dass** die Verstärkung (10) in die Verkleidung (5a, 5b) integriert ist, indem sie aus dem Material hergestellt ist, aus dem die Seitenwand (9) besteht.

7. Fahrgestell (1) eines Kraftfahrzeugs, das eine Basis (2) des Fahrzeugs bereitstellt, die eine Plattform (4) und mindestens eine Bodenverkleidung (5a, 5b) umfasst, die sich unter der Plattform (4) erstreckt und zwischen sich einen Raum abgrenzt, in dem die Ausrüstung (7a, 7b, 8) des Fahrzeugs untergebracht werden kann, **dadurch gekennzeichnet, dass** die mindestens eine Bodenverkleidung (5a, 5b) einem der Ansprüche 1 bis 6 entspricht.

8. Fahrgestell (1) nach Anspruch 7, **dadurch gekennzeichnet, dass** das Fahrgestell (1) seitliche Seitenelemente (3) umfasst, die an der Querkante (T1) der Basis (2) angeordnet sind, wobei die Seitenelemente (3) jeweils mit einer Falzung (15) versehen sind, die eine Maske bildet, die die Sicht auf die Verstärkungen (10) von der Außenseite des Fahrgestells (1) zumindest teilweise verdeckt.

9. Kraftfahrzeug, **dadurch gekennzeichnet, dass** das Fahrzeug ein Fahrgestell (1) gemäß einem der Ansprüche 7 und 8 umfasst.

## Claims

1. Bottom fairing (5a, 5b) configured to equip a motor vehicle underbody (2), the bottom fairing (5a, 5b) being of generally planar extension in a longitudinal direction (L1) and a transverse direction (T1), the bottom fairing (5a, 5b) comprising side walls (9) of vertical extension arranged respectively at least in part along (L1) the lateral edges of the fairing (5a, 5b), said side walls (9) extending longitudinally (L1) at the transverse ends (T1) of the fairing (5a, 5b), each of said side walls (9) being provided with at least one reinforcement (10) which extends at least in part vertically (V1) and at least in part along (L1) the side wall (9), **characterized in that** the reinforcement (10) comprises a cellular structure extending from the side wall (9) towards the interior volume delimited by the fairing (5a, 5b).

2. A bottom fairing (5a, 5b) according to claim 1, **characterized in that** the reinforcement (10) is provided as a transverse projection (T1) on the side wall (9) and is oriented towards the outside of the fairing (5a, 5b).

3. A bottom fairing (5a, 5b) according to any one of claims 1 and 2, **characterized in that** the reinforcement (10) is provided via a bulge (11) in the side wall (9).

4. Bottom fairing (5a, 5b) according to one of the preceding claims, **characterized in that** the cellular structure comprises a plurality of cells (12a) delimited at least between main ribs (12b) extending along a vertical/transverse plane (V1/T1) and being distributed along (L1) the reinforcement (10).

5. Bottom fairing (5a, 5b) according to claim 4, **characterized in that** the main ribs (12b) comprise notches via which the main ribs (12b) bear at least vertically (V1) against a rim (13) arranged longitudinally (L1) inside the reinforcement (10).

6. Bottom fairing (5a, 5b) according to anyone of claims 1 to 5,
**characterized in that** the reinforcement (10) is integrated into the fairing (5a, 5b) and is made from the material constituting the side wall (9).

7. A motor vehicle chassis (1) providing a vehicle underbody (2) which comprises a platform (4) and at least one bottom fairing (5a, 5b) extending beneath the platform (4) and defining between them a volume capable of housing equipment (7a, 7b, 8) of the vehicle, **characterized in that** said at least one bottom fairing (5a, 5b) conforms to anyone of claims 1 to 6.

8. A chassis (1) according to claim 7, **characterized in that** the chassis (1) comprises lateral side members (3) arranged at the transverse edge (T1) of the underbody (2), said side members (3) are each provided with a rebate (15) providing a mask that at least partially obstructs the view of the reinforcements (10) from the outside of the chassis (1).

9. Motor vehicle **characterized in that** the vehicle comprises a chassis (1) according to anyone of claims 7 and 8.
